# EUROPÄISCHE PATENTSCHRIFT

(11) **EP 3 735 825 B1**
(45) Veröffentlichungstag und Bekanntmachung des Hinweises auf die Patenterteilung: **28.01.2026**
(21) Anmeldenummer: 20173695.6
(22) Anmeldetag: 08.05.2020
(51) Int. Cl.: A01K 1/01, E01H 1/00

(54) **VORRICHTUNG ZUM ABMISTEN VON HÖFEN UND WIESEN**
DEVICE FOR REMOVING ANIMAL WASTE FROM COURTYARDS AND MEADOWS
DISPOSITIF DE NETTOYAGE DE COURS DE FERME ET DE PÂTURAGES

(30) Priorität: 10.05.2019 DE 102019112257; 10.05.2019 DE 202019102635 U; 07.05.2020 DE 202020102582 U
(43) Veröffentlichungstag der Anmeldung: 11.11.2020
(73) Patentinhaber: MTM Mehlhorn GmbH, 08297 Zwönitz (DE)
(72) Erfinder: Mehlhorn, Franziska, 08297 Zwönitz (DE)
(74) Vertreter: Rumrich, Gabriele

(56) Entgegenhaltungen:
- AT-B- 99 045
- DE-A1- 19 617 986
- DE-C2- 19 704 777
- DE-U1- 202004 016 652
- DE-U1- 202017 005 125

## Beschreibung

Die Erfindung betrifft eine Vorrichtung zum Abmisten von Höfen und Wiesen nach dem Oberbegriff des ersten Anspruchs und findet insbesondere für landwirtschaftliche Betriebe und Freilandhaltung von Pferden Anwendung.

Die durch die Tiere verursachten Verunreinigungen müssen täglich entfernt werden. Das erfolgt entweder von Hand oder mittels Vorrichtungen zur Reinigung des Bodens, die an die Nutzfahrzeuge beziehungsweise Zugmaschinen, insbesondere Traktoren montiert werden.

In der Druckschrift DE 197 04 777 C2 wird eine Vorrichtung zum Reinigen von Stall-, Hof- und sonstigen Flächen beschrieben. Mittels der Vorrichtung werden Schmutzstoffe, insbesondere Mist, mit einem an der Vorderseite eines Trägerfahrzeugs befestigbaren und von diesem auf die zu reinigende Fläche bewegbaren und von derselben wieder abhebbaren Aufnahmebehälter. Der Aufnahmebehälter ist kastenförmig, vorzugsweise in gleicher Breite wie das Trägerfahrzeug ausgebildet. Der Aufnahmebehälter weist eine vordere untere Schabkante auf, die eine Aufnahmeöffnung für die Schmutzstoffe begrenzt.

Die Vorrichtung weist eine, in einer Arbeitsstellung vor der Aufnahmeöffnung angeordnete, rotierbare und zur Freigabe der Aufnahmeöffnung nach oben über dieselbe zur Oberseite des Behälters hin wegschwenkbare Schaufelwalze auf, die mindestens zwei in Umfangsrichtung der Schaufelwalze gegeneinander versetzte, sich in Längsrichtung der Schaufelwalze erstreckende Schaufeln besitzt. Auf der Oberseite des Aufnahmebehälters ist ein Schwenkgestänge gelagert, mittels dessen die Schaufelwalze anheb- und absenkbar ist. Die Schaufelwalze ist mittels des Schwenkgestänges derart weit über der Oberseite des Behälters zurückschwenkbar, dass die Schabkante bis an Schmutzhaufen, Wände oder dergleichen zur direkten Aufnahme beziehungsweise zum Einschaufeln der Schmutzstoffe heranfahrbar ist.

Gemäß der Vorrichtung ist die Schaufelwalze schwenkbar und schafft die Möglichkeit, den Behälter wie eine Leichtgutschaufel zu verwenden. Die Schmutzstoffe werden gegen eine Wand geschoben und dadurch in den Behälter gebracht
Durch anschließendes Herabschwenken der Schaufelwalze ist ein Nachkehren möglich.

Aus der Druckschrift 197 04 777 C2 ist ebenfalls eine Vorrichtung zum Reinigen von Stall-, Hof- und sonstigen Flächen bekannt, bei welcher die Öffnung des Auffangbehälters in Fahrtrichtung nach vorn gerichtet angeordnet ist. Die Walze weist zwar durchgängige Schaufeln aus Hartgummi auf, die am Umfang der Schaufelwalze angeordnet sind, jedoch schaben die Schaufeln auf der zu reinigenden Fläche, wodurch diese, insbesondere die Grasnarbe, beschädigt werden kann. Weiterhin entsteht durch das Schaben eine erhöhte Abnutzung der Schaufeln aus Hartgummi.

Die Druckschrift AT 99045 C offenbart eine Kehrmaschine mit rotierender Bürste, die vor der in Fahrtrichtung weisenden Öffnung eines Auffanggehäuses angeordnet ist.

In dem Auffanggehäuse ist ein Schaufelrad angeordnet, welche den Kehricht in den Sammelbehälter fördert. Gemäß Seite 2, Zeilen 30 bis 33 ist das Gehäuse vollständig geschlossen, so dass der Kehricht nicht herausfallen kann und die Staubentwicklung auf diesen Raum beschränkt bleibt. Dies wird durch die Wirkung des Schaufelrades unterstützt, das einen die Bürste bestreichenden Luftstrom durch die Öffnung in das Gehäuse zu saugen sucht. Das Schaufelrad erzeugt somit eine Sogwirkung auf die Bürste, die über den Boden schabt.

Bei einer Kehrmaschine nach DE 196 17 986 A1 werden ein Tellerbesen und eine Kehrwalze kombiniert, die insbesondere staubförmiges Kehrgut vom Boden übernimmt und somit Bodenkontakt von Tellerbesen und Kehrwalze aufweist.

Die Kehrwalze weist Borsten auf, die durch eine nach unten weisende Öffnung in Richtung zum Boden weisen, dabei haben diese Bodenkontakt.

Die Druckschrift EP 3 207 793 A1 betrifft eine mobile Vorrichtung speziell zum Entfernen von Dung in Pferdeboxen. Die Vorrichtung weist einen auf Rädern montierten Behälter mit einer nach vorne öffnenden Schaufel auf. Des Weiteren weist die Vorrichtung eine Häckselanordnung zum Schneiden und Fördern von den zu beseitigenden Materialien auf. An der Vorrichtung ist ein abnehmbarer Materialtank angeordnet, der an einer Rahmenkastenklappe angelenkt und gekippt ist. Im Inneren ist ein Gebläse angeordnet, dass die Förderung in den Behälter unterstützt.

Die Druckschrift DE 20 2004 016 652 U1 offenbart ein Gerät zum Aufsammeln von Pferdeäpfeln mit einem Sammelbehälter, einem Fahrwerk für den Sammelbehälter, Mittel zur Ankopplung und an einem Nutzfahrzeug und einen Rotor. Der Rotor ist vor der Einfüllöffnung des Sammelbehälters angeordnet. Des Weiteren weist das Gerät eine verschließbare Entleerungsöffnung am Sammelbehälter auf.

Aus der Druckschrift DE 20 2017 005 125 U1 ist ein Kehrmaschinengehäuse für eine Kehrmaschine zum Aufnehmen von Schmutz in einem Schmutzsammelbehälter bekannt, insbesondere zum Schieben und/oder Ziehen, zur Aufnahme von zumindest einer Kehrwalze. Mittels des Gehäuses lassen sich unterschiedliche Kehrwalzen oder Behälter befestigen. Das Gehäuse ist seitlich offen gestaltet und dient insbesondere der Straßenreinigung.

Die Vorrichtungen nach dem Stand der Technik sind nur an einem Frontlader montierbar, da die Hubfunktion des Frontladers zum Leeren des Behälters genutzt wird. Jedoch sind Frontlader deutlich teurer als Traktoren ohne diese Funktion.

Aufgabe der Erfindung ist es, eine Vorrichtung zum Abmisten von Höfen und Wiesen zu entwickeln, welche einen einfachen konstruktiven Aufbau aufweist und an nahezu jedem Nutzfahrzeug der Landwirtschaft montierbar ist.

Diese Aufgabe wird mit den kennzeichnenden Merkmalen des ersten Patentanspruchs gelöst.

Vorteilhafte Ausgestaltungen ergeben sich aus den Unteransprüchen.

Die erfindungsgemäße Vorrichtung zum Abmisten von Höfen und Wiesen für die Montage an einem Nutzfahrzeug, wird durch die Merkmale des Anspruchs 1 festgelegt und umfasst ein Traggestell für die Befestigung der Vorrichtung an dem Nutzfahrzeug und einen Behälter zur Aufnahme von Schmutzstoffen mit einer Behälteröffnung, wobei der Behälter in Bezug auf das Traggestell mittels eines Hubelements nach oben schwenkbar an dem Traggestell angeordnet ist derart, dass in einer Entleerungsposition die Schmutzstoffe durch die Behälteröffnung des nach oben geschwenkten Behälters entleerbar sind und dass in einer Arbeitsposition der Behälter herabgeschwenkt ist derart, dass die Behälteröffnung mittels des Traggestells verschlossen ist, sowie mit einer, in einer Arbeitsposition nach unten in Richtung des Bodens weisenden Öffnung angeordneten Förderwalze mit Mitteln zum Fördern der Schmutzstoffe in den Behälter, wobei wenigstens ein Mittel durch die nach unten weisende Öffnung in Richtung des Bodens reicht, wobei die Förderwalze mit dem Behälter verbunden ist und die nach unten weisende Öffnung in dem Behälter oder an dem Traggestell ausgebildet ist und die Förderwalze in Form einer Sammelwalze ausgebildet ist, wobei die Sammelwalze umfangsseitige Sammellippen aufweist und dass die Sammelwalze im Bereich der nach unten weisenden Öffnung angeordnet ist, wobei in der Arbeitsposition bei einem geschlossenen Behälter wenigstens eine Sammellippe durch die nach unten weisende Öffnung in Richtung des Bodens reicht derart, dass die Sammellippe 3mm bis 20mm vom Boden beabstandet ist und mittels der Sammelwalze durch deren Rotation im Bereich der nach unten weisenden Öffnung ein Unterdruck erzeugbar ist und dass der Behälter in Bezug auf das Traggestell mittels eines Hubelements nach oben schwenkbar an dem Traggestell angeordnet ist derart, dass in einer Entleerungsposition die Schmutzstoffe durch die Behälteröffnung des nach oben geschwenkten Behälters entleerbar sind und dass in der Arbeitsposition der Behälter herabgeschwenkt ist derart, dass die Behälteröffnung mittels des Traggestells verschlossen ist.

Die Förderwalze ist vorzugsweise mittels eines an ihrer Längsachse montierten Motors angetrieben. Es kann jedoch auch ein Antrieb der Walze über ein Getriebe erfolgen.

Die Förderwalze in Form einer Sammelwalze mit umfangsseitigen Sammellippen ausgebildet, wobei
die Sammelwalze im Bereich der nach unten weisenden Öffnung angeordnet ist derart, dass wenigstens eine Sammellippe durch die nach unten weitende Öffnung in Richtung des Bodens reicht.

Die Sammellippen erstrecken sich die über die gesamte Breite der Sammelwalze. Bevorzugt erstreckt sich die Sammelwalze über nahezu die gesamte Breite der Vorrichtung. Die nach unten weisende und in Eingriff mit den Schmutzstoffen stehende Sammellippe ist in ihrer vertikalen Ausrichtung von dem Boden 3 bis 20mm beabstandet, wobei mittels der Sammelwalze durch deren Rotation im Bereich der nach unten weisenden Öffnung ein Unterdruck erzeugbar ist. Der Behälter ist zwischen 20 und 50 mm über dem Boden angeordnet. Bevorzugt beträgt der Abstand der in Eingriff mit den Schmutzstoffen stehende Sammellippe 5 bis 10 mm vom Boden. Der Behälter weist bevorzugt einen Abstand zum Boden von 40mm auf.

Der Unterdruck entsteht durch Einsatz der Sammellippen in Verbindung mit dem geschlossenen Behälter. Die Sammellippen sind bevorzugt aus einem vulkanisierten Elastomer ausgebildet. So kann mittels der Sammellippen Luft aus dem Behälter geschaufelt werden. Gleichzeitig werden die Schmutzstoffe durch eine Sogwirkung "eingesaugt". Es bleibt eine saubere Oberfläche zurück, wobei kein Abtrag des Bodens beziehungsweise des Erdreichs erfolgt.

Die Vorrichtung findet auf Beton und Pflasterflächen, Paddockplatten, Kunstrasen, Mineralgemischen und Asphaltrecycling Anwendung.

Gemäß der Vorrichtung ist die Förderwalze in Fahrtrichtung vor der Behälteröffnung angeordnet, wobei in einem Schubbetrieb der Vorrichtung die Förderwalze an dem Traggestell und in einem Zugbetrieb die Förderwalze an dem nach oben schwenkbarem Behälter angeordnet ist. Der Schubbetrieb beschreibt den Anbau der Vorrichtung an der Front des Nutzfahrzeuges, der Zugbetrieb beschreibt den Heckanbau. Es kann in Abhängigkeit des verwendeten Nutzfahrzeuges eine entsprechende Vorrichtung montiert werden.

Die Förderwalze ist höhenverstellbar und mittels eines Schnellverschlusses wechselbar. Es können entweder zwei mechanisch voreingestellte Höhen mittels Exzenter oder eine individuelle Höheneinstellung Anwendung finden. Das ermöglicht das schnelle Auswechseln der jeweiligen Walzen je nach Verwendungszweck. Die Höhenverstellung ist vorzugsweise mechanisch mit einem Arretierungsbolzen ausgebildet. So kann auf den Untergrund beziehungsweise auf die Abnutzung der an der Sammelwalze angeordneten Sammellippen reagiert werden.

In einer vorteilhaften Ausgestaltung ist der Behälter mittels eines Scharniers mit dem Traggestell verbunden. Die Schwenkbewegung erfolgt bevorzugt mittels eines Hubelements, wobei das erste Ende jedes Hubelements am Behälter und das zweite Ende jedes Hubelements am Traggestell angeordnet ist.

Das erste und zweite Hubelement ist bevorzugt in Form eines ersten und zweiten Hydraulikzylinders ausgebildet, wobei die Hydraulikzylinder linksseitig und rechtsseitig an dem Behälter beziehungsweise Traggestell angeordnet sind. Es können jedoch auch Gewindestangen oder anderweitige Mittel zur Änderung der Einbaulänge des Hubelements Anwendung finden.

Der Behälter weist bevorzugt einen Aussteifungsrahmen zur Aufnahme der Druckkräfte sowie der Bewegungskräfte während der Nutzung und Entleerung auf.

Vorzugsweise ist das Traggestell mit einer Euroaufnahme zum Anschluss an einer Zugmaschine ausgebildet. So können die Aufnahmen an Front und Heck des Nutzfahrzeuges, insbesondere des Traktors genutzt werden. Des Weiteren kann die Vorrichtung mittels einer handelsüblichen Adapterlösung von der Euroaufnahme auf eine 3-Punkt Aufnahme adaptiert werden.

Der Behälter weist vorzugsweise eine zu der Behälterwand beabstandete Flurwalze mit Gelenklager auf. Die Flurwalze ist in Fahrtrichtung nach der Förderwalze angeordnet, wobei in einer ersten Ausgestaltung als Frontanbau das Traggestell die Flurwalze mit Gelenklager aufweist und in einer zweiten Ausgestaltung als Heckanbau am Nutzfahrzeug der Behälter die Flurwalze mit Gelenkwelle aufweist. Mittels der Flurwalze kann ein gleichbleibender Abstand zum Boden gewährleistet werden. Des Weiteren wird ein Eingraben der Vorrichtung vermieden.

Das ermöglicht das Ausgleichen von Bodenerhebungen und dient durch eine robuste Ausgestaltung als Anprallschutz.

Vorzugsweise weist die Vorrichtung eine Schwimmstellung auf. So können Bodenunebenheiten besser zwischen der Zugmaschine und der Vorrichtung ausgeglichen werden. Der Vorrichtung kann ein unabhängiges Bewegungsmuster in Abhängigkeit von dem Untergrund gegenüber der Zugmaschine eingeräumt werden. Zudem weist die Vorrichtung einen Querriegel auf, mittels dessen eine Höhenbewegung ausgleichbar ist.

Für die Nutzung auf aller Art von Untergründen weist die Vorrichtung am Behälter montierte und drehbar gelagerte Räder auf. Diese können seitlich oder unter dem Behälter montiert sein. Bei einer seitlichen Montage erstreckt sich der Behälter zwischen den Rädern in Richtung des Bodens. Besonders bevorzugt sind die Räder mittels einer Einzelradaufhängung mit dem Behälter verbunden und unter einer an dem Behälter angebrachten Abdeckung angeordnet. Die Abdeckung kann L-förmig ausgestaltet sein und wird mit dem Behälter an einem Schenkel der Abdeckung verbunden. Der zweite Schenkel dient als Abdeckung der Räder.

Der Behälter ist bevorzugt aus Stahlblech gekantet beziehungsweise verschweiß, wodurch eine robuste Bauform erzeugbar ist.

Bevorzugt ist im Inneren des Behälters wenigstens ein Schottblech angeordnet, sodass eine optimale Befüllung des Behälters mit den gesammelten Schmutzstoffen trotz auftretender Vibrationen möglich ist. Es wird verhindert, dass das Material durch die Vibrationen wieder nach vorn gefördert wird.

Die Vorrichtung wird mittels eines Hydrauliksystems mit dem für die Hubelemente notwendigen Fluid und dem benötigten Betriebsdruck versehen. Das Hydrauliksystem kann an den Traktor beziehungsweise das Nutzfahrzeug angeschlossen werden. Zum Schutz der Vorrichtung sind in dieser einige Sicherheitsmaßnahmen angeordnet, wie zum Beispiel Überdruck- und Rückschlagventile. Diese Ventile schützen die hydraulische Einheit vor Schäden durch Fehlbedienung oder Störungen.

Des Weiteren ist ein Ventil zur Gewährleistung aller hydraulischen Funktionen vorgesehen, auch wenn nur ein doppelwirkender hydraulischer Steuerkreislauf vorhanden ist. So ist die Vorrichtung an allen Arten von Zugmaschinen einsetzbar.

In einer vorteilhaften Ausgestaltung ist die Vorrichtung mittels einer eigenen Steuereinrichtung mittels Kabel oder kabellos bedienbar. Dies kann beispielsweise über eine Funkfernbedienung oder anderweitige drahtlose Kommunikationsmöglichkeiten erfolgen.

Die erfindungsgemäße Vorrichtung ist in einer ersten Ausgestaltung als Frontanbau und in einer zweiten Ausgestaltung als Heckanbau nutzbar. Die Verbindung mit dem Nutzfahrzeug erfolgt entweder mittels der an der Vorrichtung ausgebildeten EuroAufnahme oder mittels handelsüblicher Adapterlösungen für eine Drei-Punkt-Aufnahme.

Die Erfindung wird nachfolgend an einem Ausführungsbeispiel und zugehörigen Zeichnungen näher erläutert, ohne auf diese beschränkt zu sein.

Es zeigen:
- Figur 1: eine Vorrichtung in der Seitenansicht in einer Arbeitsposition,
- Figur 2: eine Vorrichtung in der Seitenansicht in einer Entleerungsposition,
- Figur 3: eine Draufsicht auf die Vorrichtung.
- Figur 4: eine alternative Ausgestaltung der Vorrichtung für den Schubbetrieb,
- Figur 5: die Entleerungsposition der alternativen Ausgestaltung der Vorrichtung.

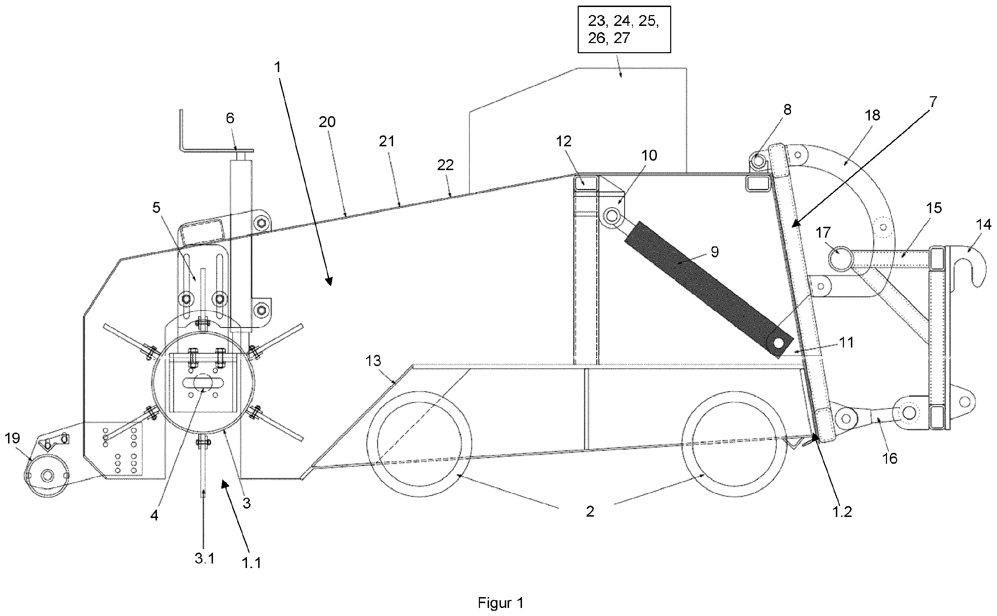

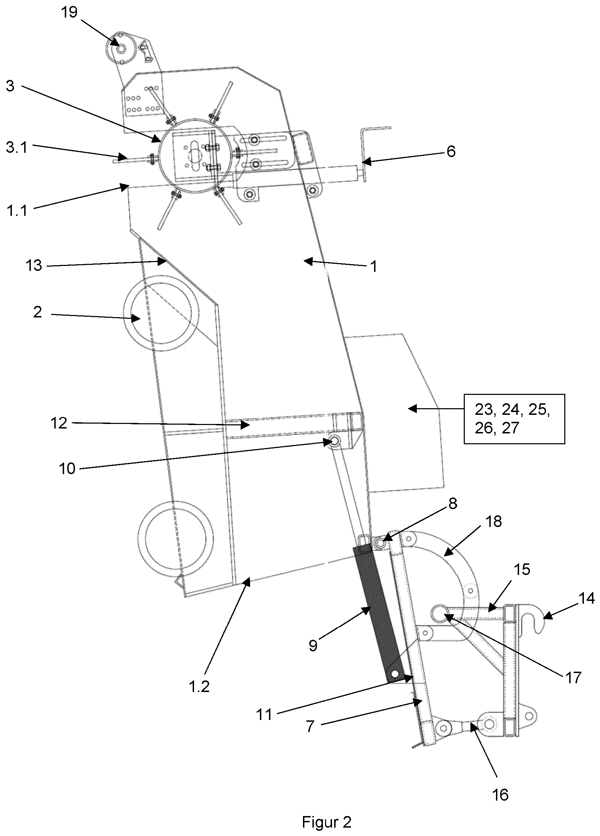

Die Vorrichtung gemäß Figur 1 und 2 betrifft eine Vorrichtung für einen Heckanbau an einem Nutzfahrzeug und ist in einer Seitenansicht in einer Arbeitsposition (Figur 1) und einer Entleerungsposition (Figur 2) dargestellt. Die Vorrichtung weist einen Behälter 1 mit daran befestigten Rädern 2 auf. Der Behälter 1 ist vorzugsweise aus einem Stahlblech gekantet beziehungsweise verschweißt und bietet so eine robuste Bauform gegenüber Krafteinwirkungen und Einflüssen von außen.

Die Räder 2 können seitlich, wie in den Figuren dargestellt, aber auch unter dem Behälter 1 angeordnet sein. Des Weiteren sind die Räder 2 um 360° drehbar gelagert und mittels Einzelradaufhängung mit dem Behälter 1 verbunden. Das ermöglicht den Einsatz auf allen Arten von Untergründen sowie einen reduzierten Kurvenradius.

In dem vorderen Bereich des Behälters 1 ist eine Förderwalze in Form einer Sammelwalze 3 über einer nach unten in Richtung des Bodens weisenden Öffnung 1.1 in dem Behälter 1 angeordnet. An der Sammelwalze 3.1 sind umfangsseitig Sammellippen 3.1 angeirdnet, wobei weningstens eine Sammellippe 3.1 durch die Öffnung 1.1 in Richtung des Bodens weist. Die nach unten weisende und in Eingriff mit den Schmutzstoffen stehende Sammellippe 3.1 ist in ihrer vertikalen Ausrichtung von dem Boden 5mm beabstandet, wobei mittels der Sammelwalze 3 durch deren Rotation im Bereich der nach unten weisenden Öffnung 1.1 ein Unterdruck erzeugbar ist. Der Behälter 1 ist bevorzugt 40 mm über dem Boden angeordnet. Die Sammellippen 3.1 erstrecken sich bevorzugt über die gesamte Breite der Sammelwalze 3 und sind bevorzugt aus einem vulkanisierten Elastomer ausgebildet.

Die Sammelwalze 3 ist bevorzugt mittels einer Schnellwechseleinheit 4 wechselbar derart, dass je nach Verwendungszweck eine geeignete Walze schnell einsetzbar ist.

Die Sammelwalze 3 ist an beiden Enden mittels einer Aufnahmekonsole 5 mit dem Behälter 1 verbunden, wobei die Aufnahmekonsole 5 eine mechanische Höhenverstellung 6 mit Arretierungsbolzen aufweist. Des Weiteren umfasst die Aufnahmekonsole 5 einen Antrieb für die Sammelwalze 3. Die Höhenverstellung 6 kann links- und rechtsseitig an der Vorrichtung montiert sein. Auch eine elektrische oder hydraulische Steuerung der Höhenverstellung ist denkbar.

Der Behälter 1 ist an einem Traggestell 7 angeordnet derart, dass das Traggestell 7 eine Anlagefläche für den Behälter 1 an einer hinteren, in Richtung der Zugmaschine weisenden Behälteröffnung 1.2 des Behälters 1 bildet. Die Behälteröffnung 1.2 wird mittels des Traggestells 7 in der Arbeitsposition gemäß Figur 1 verschlossen.

Der Behälter 1 ist mittels eines Scharniers 8 schwenkbar mit dem Traggestell 7 verbunden und ist mittels eines Hubelements 9 nach oben ausgelenkbar. Gemäß Figur 2 schwenkt der Behälter 1 sowie die daran montierte Sammelwalze 3 an dem Scharnier 8 nach oben, wodurch die Behälteröffnung 1.2 des Behälters 1 freigegeben wird. Dies führt zum Entleeren des Behälters 1 von den gesammelten Schmutzstoffen. Das Hubelement 9 ist vorzugsweise in Form eines Hydraulikzylinders ausgebildet und rechtsseitig und linksseitig des Behälters 1 mit seinem ersten Ende an einer Konsole 10 an dem Behälter 1 sowie mit seinem zweiten Ende an einer Anschlusskonsole 11 an dem Traggestell 7 montiert. Es kann jedoch auch lediglich ein Hubelement vorgesehen sein, das vorzugsweise mittig auf dem Behälter 1 in Richtung des Traggestells 7 angeordnet ist.

Vorzugsweise weist der Behälter einen Aussteifungsrahmen 12 zur Aufnahme der Druckkräfte sowie Bewegungskräfte durch Bewegung der Vorrichtung auf. Bevorzugt ist die Konsole 10 an dem Aussteifungsrahmen 12 oder im Bereich des Aussteifungsrahmens 12 befestigt.

Im Inneren des Behälters 1 ist wenigstens ein Schottblech 13 vorgesehen. Mittels des Einsatzes dieses Schottbleches 13 ist die Nutzung des maximalen Volumens des Behälters 1 möglich, da andernfalls das gesammelte Material während des Einsatzes durch Vibrationen und Erschütterungen wieder nach vorn gerüttelt wird und sich im Bereich der Sammelwalze 3 zusetzt.

Die Vorrichtung wird mittels einer Anschlussaufnahme 14 mit dem Nutzfahrzeug, beziehungsweise der Zugmaschine verbunden. Die Anschlussaufnahme 14 ist bevorzugt in Form einer Euroaufnahme ausgebildet sodass die Vorrichtung an üblichen Zugmaschinen befestigbar ist. Die Anschlussaufnahme 14 ist mit dem Traggestell 7 linksseitig und rechtsseitig über eine obere Zug-/ Drucktraverse 15 und eine untere Druck-/ Zugstreben 16 verbunden, wobei die untere Druck-/ Zugstrebe 16 beidseitig schwenkbar gelagert ist. So kann die Lastübertragung zwischen Zugmaschine und Vorrichtung erfolgen.

Die Vorrichtung ist bevorzugt schwimmend in Bezug auf das Nutzfahrzeug beziehungsweise die Zugmaschine gelagert. Dazu sind die oberen Zug-/Drucktraversen 15 miteinander mittels eines Querriegels 17 verbunden, der in einem Rundprofil 18 geführt wird, sodass Höhenbewegungen ausgeglichen werden können, jedoch Zug- und Druckkräfte durch die Zugmaschine übertragbar sind. Durch die schwimmende Lagerung wird der Vorrichtung ein unabhängiges Bewegungsmuster in Abhängigkeit von Untergrund gegenüber der Zugmaschine eingeräumt.

Im Bereich der Sammelwalze 3 außerhalb des Behälters 1 ist eine Flurwalze 19 mit einem Gelenklager angeordnet. Mittels der Flurwalze 19 lassen sich Bodenerhebungen ausgleichen. Des Weiteren dient die Flurwalze 19 als Anprallschutz für die Vorrichtung.

Die Bedienung der Vorrichtung erfolgt über ein Hydrauliksystem, wobei in dem Hydrauliksystem zum Schutz ein Überdruck-/und Rückschlagventil 20 vorgesehen sind. Das schützt die hydraulische Einheit vor Schäden durch Fehlbedienung oder Störungen. Des Weiteren umfasst das Hydrauliksystem ein Ventil 21 zur Gewährleistung aller hydraulischen Funktionen auch wenn nur ein doppelwirkender hydraulischer Steuerkreislauf vorhanden ist. Damit ist es an allen Arten von Zugmaschinen einsetzbar. Die Steuerung erfolgt bevorzugt drahtlos mittels einer Funkfernbedienung. Die Verbindung der einzelnen Bauteile erfolgt über eine hydraulische Verrohrung 22. Bevorzugt sind die Bauteile 20, 21 und 22 in einem Aufnahmekasten 23 angeordnet. Des Weiteren können in dem Aufnahmekasten ein Umschaltventil 24, ein 12V Anschluss 25, eine Stromversorgung 26 und ein Druckflussschutzregelventil 27 angeordnet sein. Das Umschaltventil 24 ist in Form eine 6/2 Wege-Umschaltventils ausgebildet, wobei mittels des Ventils 24 und den 12V-Anschluss sowie die Stromversorgung 26 das Ansteuern der hydraulischen Funktionen erfolgt. Der 12V Anschluss dient der Ansteuerung der Bordelektronik des Laders. Die Stromversorgung 26 ist in Form einer Akku-Einheit ausgebildet und findet Anwendung, wenn kein Anschluss an das 12V Netz möglich ist. Das Druckflussschutzregelventil ist stufenlos einstellbar um die Walzengeschwindigkeit beziehungsweise den hydraulischen Druck im System in Abhängigkeit des verwendeten Nutzfahrzeuges einzustellen und zu regulieren.

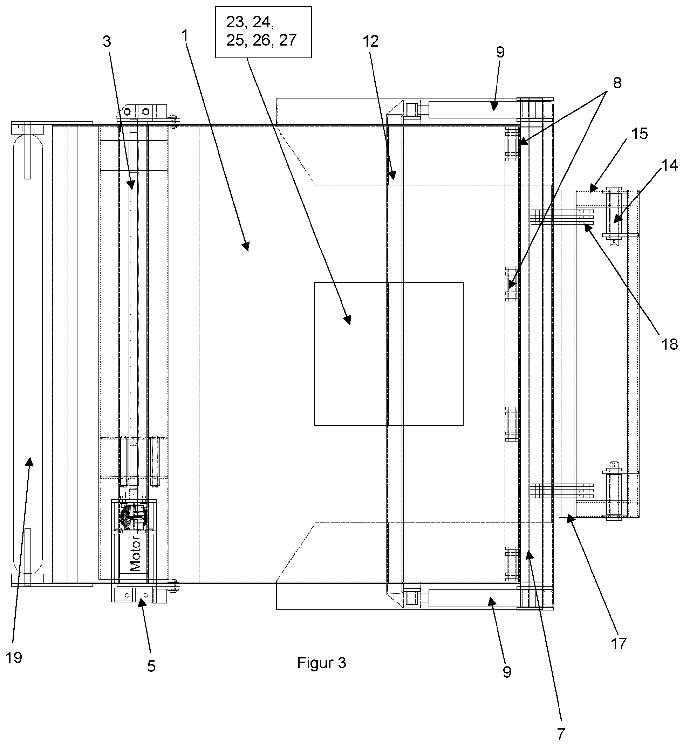

Figur 3 zeigt die Vorrichtung in einer Draufsicht gemäß der Ausgestaltung der Vorrichtung in den Figuren 1 und 2. Das Hubelement 9 ist vorzugsweise in eines Hydraulikzylinders ausgebildet und rechtsseitig und linksseitig des Behälters 1 mit an dem Behälter 1 sowie an dem Traggestell 7 montiert. Mittels der Hubelemente 9 lässt sich eine Schwenkbewegung des Behälters 1 um mehrere Scharniere 8 am Traggestell 7 umsetzen.

Der Behälter 1 wird umfangsseitig von dem Aussteifungsrahmen 12 verstärkt. Des Weiteren ist die Sammelwalze 3 dargestellt, die mittels eines koaxialen Motors, der an der Konsole 5 angeordnet ist angetrieben wird. Die Sammelwalze 3 erstreckt sich mit den daran angeordneten Sammellippen 3.1 über nahezu die gesamte Breite der Vorrichtung. Auf dem Behälter 1 ist der Aufnahmekasten 23 in Form einer Erhebung montiert, wobei der Aufnahmekasten 23 das Überdruck-/ und Rückschlagventil, das Ventil zum Anschluss an eine Zugmaschine und die hydraulische Verrohrung beinhaltet. In der Draufsicht links ist die Flurwalze 19 am Behälter 1 montiert, wobei die Flurwalze 19 hervorsteht und so als Anprallschutz dient.

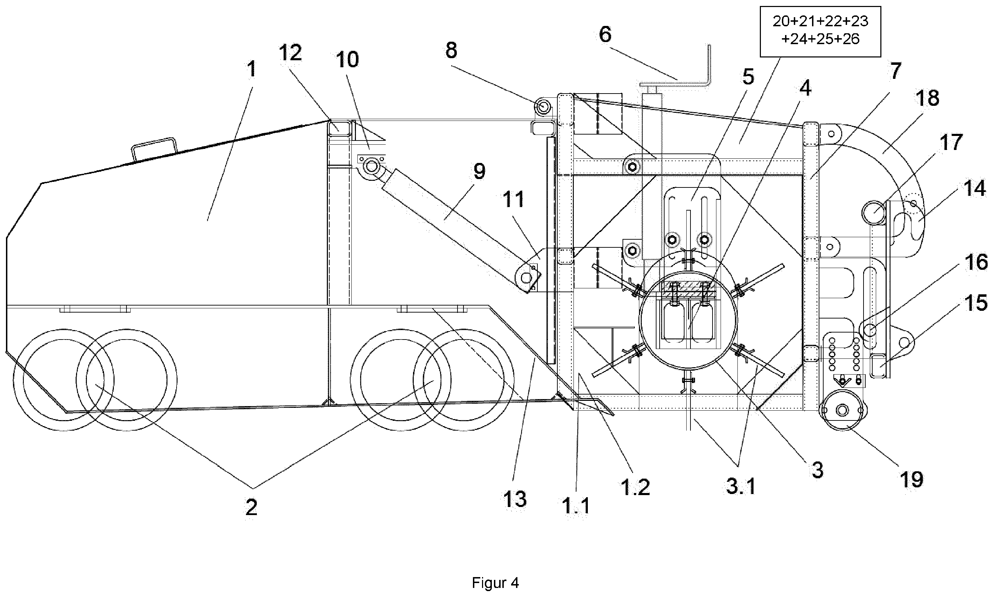

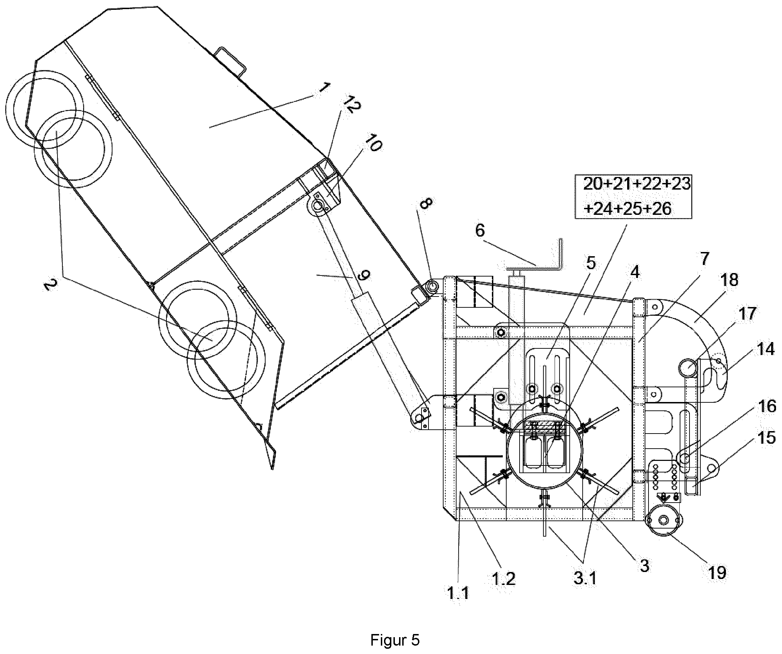

Eine alternative Ausgestaltung der Vorrichtung für ein frontseitige Montage an einem Nutzfahrzeug ist in den Figuren 4 und 5 dargestellt.

Gemäß den Figuren 4 und 5 unterscheidet sich die Ausgestaltung in Bezug auf die Figuren 1 bis 3 darin, dass die nach unten weisende Öffnung 1.1 mit der darin angeordneten Förderwalze 3 an dem Traggestell 7 ausgebildet ist.

Die Sammelwalze 3 ist im Bereich der nach unten in Richtung des Bodens weisenden Öffnung 1.1 in dem Traggestell 7 angeordnet. An der Sammelwalze 3 sind umfangsseitig Sammellippen 3.1 angeordnet, wobei wenigstens eine Sammellippe 3.1 durch die Öffnung 1.1 in Richtung des Bodens weist. Die nach unten weisende und in Eingriff mit den Schmutzstoffen stehende Sammellippe 3.1 ist in ihrer vertikalen Ausrichtung von dem Boden 5mm beabstandet. Auch in dieser Ausgestaltung ist mittels der Sammelwalze 3 durch deren Rotation im Bereich der nach unten weisenden Öffnung 1.1 ein Unterdruck erzeugbar. Der Behälter 1 ist 40 mm über dem Boden angeordnet. Die Sammellippen 3.1 erstrecken sich bevorzugt über die gesamte Breite der Sammelwalze 3 und sind bevorzugt aus einem vulkanisierten Elastomer ausgebildet. Die Sammelwalze 3 erstreckt sich bevorzugt über nahezu die gesamte Breite der Vorrichtung.

Die Sammelwalze 3 ist bevorzugt mittels einer Schnellwechseleinheit 4 wechselbar und an beiden Enden mittels einer Aufnahmekonsole 5 mit dem Traggestell 7 verbunden, wobei die Aufnahmekonsole 5 eine mechanische Höhenverstellung 6 mit Arretierungsbolzen aufweist. Des Weiteren umfasst die Aufnahmekonsole 5 einen Antrieb für die Sammelwalze 3. Die Höhenverstellung 6 kann links- und rechtsseitig an der Vorrichtung montiert sein. Auch eine elektrische oder hydraulische Steuerung der Höhenverstellung ist denkbar. Des Weiteren kann eine Memory-Funktion für zwei voreingestellte Höhen mittels Exzenter vorhanden sein. Alternativ ist eine individuelle Höhenanpassung möglich.

Der Behälter 1 ist an dem Traggestell 7 angeordnet derart, dass das Traggestell 7 eine Anlagefläche für den Behälter 1 an einer hinteren, in Richtung der Zugmaschine weisenden Behälteröffnung 1.2 des Behälters 1 bildet. Die Behälteröffnung 1.2 wird mittels des Traggestells 7 in der Arbeitsposition gemäß Figur 4 verschlossen. Die geöffnete Position ist in Figur 5 dargestellt.

Der Behälter 1 ist mittels eines Scharniers 8 schwenkbar mit dem Traggestell 7 verbunden und ist mittels eines Hubelements 9 nach oben ausgelenkbar. Gemäß Figur 5 schwenkt der Behälter 1 sowie die daran angeordneten Räder 2 an dem Scharnier 8 nach oben, wodurch die Behälteröffnung 1.2 des Behälters 1 freigegeben wird. Dies führt zum Entleeren des Behälters 1 von den gesammelten Schmutzstoffen. Das Hubelement 9 ist vorzugsweise in Form eines Hydraulikzylinders ausgebildet und rechtsseitig und linksseitig des Behälters 1 mit seinem ersten Ende an einer Konsole 10 an dem Behälter 1 sowie mit seinem zweiten Ende an einer Anschlusskonsole 11 an dem Traggestell 7 montiert. Es kann jedoch auch lediglich ein Hubelement vorgesehen sein, das vorzugsweise mittig auf dem Behälter 1 in Richtung des Traggestells 7 angeordnet ist.

Die Ausgestaltung des Aussteifungsrahmens sowie der Ausgestaltung des Behälters 1 ist analog zu der Vorrichtung gemäß den Figuren 1 bis 3.

Die Vorrichtung wird mittels einer Anschlussaufnahme 14 mit dem Nutzfahrzeug, beziehungsweise der Zugmaschine verbunden. Die Anschlussaufnahme 14 ist bevorzugt in Form einer Euroaufnahme ausgebildet sodass die Vorrichtung an üblichen Zugmaschinen befestigbar ist. Die Anschlussaufnahme 14 ist mit dem Traggestell 7 linksseitig und rechtsseitig über eine obere Zug-/ Drucktraverse 15 und eine untere Druck-/ Zugstreben 16 verbunden, wobei die untere Druck-/ Zugstrebe 16 beidseitig schwenkbar gelagert ist. So kann die Lastübertragung zwischen Zugmaschine und Vorrichtung erfolgen. Die Anschlussaufnahme 14 kann mittels geeigneter Adapter an jedes Nutzfahrzeug montiert werden.

Die Vorrichtung ist bevorzugt schwimmend in Bezug auf das Nutzfahrzeug beziehungsweise die Zugmaschine gelagert. Dazu sind die oberen Zug-/Drucktraversen 15 miteinander mittels eines Querriegels 17 verbunden, der in einem Rundprofil 18 geführt wird, sodass Höhenbewegungen ausgeglichen werden können, jedoch Zug- und Druckkräfte durch die Zugmaschine übertragbar sind. Durch die schwimmende Lagerung wird der Vorrichtung ein unabhängiges Bewegungsmuster in Abhängigkeit von Untergrund gegenüber der Zugmaschine eingeräumt.

Im Bereich der Sammelwalze 3 am Traggestell 7 ist in Fahrtrichtung der Sammelwalze 3 nachfolgend die Flurwalze 19 mit einem Gelenklager angeordnet. Mittels der Flurwalze 19 lassen sich Bodenerhebungen ausgleichen. Es kann ein konstanter Abstand zum Boden gehalten werden.

Die Bedienung und Steuerung der Vorrichtung als Frontanbau gemäß den Figuren 4 und 5 entspricht technisch der Ausgestaltung gemäß der Figuren 1 bis 3 als Heckanbau.

Mit der vorliegenden Erfindung kann die Beseitigung von Schmutzstoffen mittels einfacher Zugmaschinen beziehungsweise Traktoren und ohne Frontlader erfolgen. Des Weiteren lässt sich der Behälter leichter reinigen, da durch die Schwerkraft die Verschmutzungen bei Zugabe von Wasser besser abfließen.

### Bezugszeichenliste

- 1: Behälter
- 1.1: Öffnung
- 1.2: Behälteröffnung
- 2: Räder
- 3: Förderwalze/Sammelwalze
- 3.1: Sammellippe
- 4: Schnellwechseleinrichtung
- 5: Aufnahmekonsole
- 6: Höhenverstellung
- 7: Traggestell
- 8: Scharnier
- 9: Hubelement
- 10: Konsole
- 11: Anschlusskonsole
- 12: Aussteifungsrahmen
- 13: Schottblech
- 14: Anschlussaufnahme
- 15: Zug-/ Drucktraverse
- 16: Druck-/Zugstrebe
- 17: Querriegel
- 18: Rundprofil
- 19: Flurwalze
- 20: Überdruck-/ und Rückschlagventil
- 21: Durchflussregelventil
- 22: Hydraulische Verrohrung
- 23: Aufnahmekasten
- 24: Umschaltventil
- 25: 12V Anschluss
- 26: Stromversorgung
- 27: Druckflussschutzregelventil

## Patentansprüche

1. Vorrichtung zum Abmisten von Höfen und Wiesen für die Montage an einem Nutzfahrzeug, umfassend ein Traggestell (7) für die Befestigung der Vorrichtung an dem Nutzfahrzeug und einen Behälter (1) zur Aufnahme von Schmutzstoffen mit einer Behälteröffnung (1.2), wobei der Behälter (1) in Bezug auf das Traggestell (7) mittels eines Hubelements (9) nach oben schwenkbar an dem Traggestell (7) angeordnet ist derart, dass in einer Entleerungsposition die Schmutzstoffe durch die Behälteröffnung (1.2) des nach oben geschwenkten Behälters (1) entleerbar sind und dass in einer Arbeitsposition der Behälter (1) herabgeschwenkt ist derart, dass die Behälteröffnung (1.2) mittels des Traggestells (7) verschlossen ist, sowie mit einer, in einer Öffnung (1.1) angeordneten Förderwalze (3) mit Mitteln zum Fördern der Schmutzstoffe in den Behälter (1), wobei wenigstens ein Mittel durch die Öffnung (1.1) in Richtung des Bodens reicht, wobei die Förderwalze (3) mit dem Behälter (1) verbunden ist, wobei Öffnung (1.1) in dem Behälter oder an dem Traggestell ausgebildet ist und die Förderwalze (3) in Form einer Sammelwalze (3) ausgebildet ist, wobei die Sammelwalze (3) umfangsseitige Sammellippen (3.1) aufweist und wobei die Sammelwalze (3) im Bereich der Öffnung (1.1) angeordnet ist, **dadurch gekennzeichnet, dass** die Öffnung (1.1) die in der die Förderwalze (3) angeordnet ist, in der Arbeitsposition der Vorrichtung nach unten in Richtung des Bodens ausgebildet ist, und dass
in der Arbeitsposition bei einem geschlossenen Behälter (1) wenigstens eine Sammellippe (3.1) durch die nach unten weisende Öffnung (1.1) in Richtung des Bodens reicht derart, dass die Sammellippe (3.1) 3mm bis 20mm vom Boden beabstandet ist und mittels der Sammelwalze (3) durch deren Rotation im Bereich der nach unten weisenden Öffnung (1.1) ein Unterdruck erzeugbar ist.

2. Vorrichtung nach Anspruch 1, **dadurch gekennzeichnet, dass** sich die Sammellippen (3.1) über die gesamte Breite der Sammelwalze (3) erstrecken und dass die nach unten weisende und in Eingriff mit den Schmutzstoffen stehende Sammellippe (3.1) in ihrer vertikalen Ausrichtung von dem Boden 3 bis 20mm beabstandet ist, wobei mittels der Sammelwalze (3) durch deren Rotation im Bereich der nach unten weisenden Öffnung (1.1) der Unterdruck erzeugbar ist, wobei der Behälter (1) zwischen 20 und 50 mm über dem Boden angeordnet ist.

3. Vorrichtung nach Anspruch 1 oder 2, **dadurch gekennzeichnet, dass** die Förderwalze (3) in Fahrtrichtung vor der Behälteröffnung (1.2) angeordnet ist, wobei in einer ersten Ausgestaltung in einem Schubbetrieb der Vorrichtung die Förderwalze (3) an dem Traggestell (7) und in einer zweiten Ausgestaltung in einem Zugbetrieb die Förderwalze (3) an dem nach oben schwenkbarem Behälter (1) angeordnet ist.

4. Vorrichtung nach einem der Ansprüche 1 bis 3, **dadurch gekennzeichnet, dass** die Förderwalze (3) höhenverstellbar und mittels eines Schnellverschlusses (4) wechselbar ist.

5. Vorrichtung nach einem der Ansprüche 1 bis 4, **dadurch gekennzeichnet, dass** der Behälter (1) mittels eines Scharniers (8) mit dem Traggestell (7) verbunden ist und dass die Schwenkbewegung mittels eines hydraulischen Hubelements (9) erfolgt, wobei ein erstes Ende des Hubelements (9) am Behälter (1) und ein zweites Ende des Hubelements am Traggestell (7) angeordnet ist.

6. Vorrichtung nach einem der Ansprüche 1 bis 5, **dadurch gekennzeichnet, dass** das Traggestell (7) eine Anschlussaufnahme (14) in Form einer Euroaufnahme aufweist.

7. Vorrichtung nach einem der Ansprüche 1 bis 6, **dadurch gekennzeichnet, dass** der Behälter (1) eine zu der Behälterwand beabstandet angeordnete Flurwalze (19) mit Gelenklager aufweist.

8. Vorrichtung nach einem der Ansprüche 1 bis 6, **dadurch gekennzeichnet, dass** das Traggestell (7) eine Flurwalze (19) mit Gelenklager aufweist.

9. Vorrichtung nach Anspruch 7 und 8, **dadurch gekennzeichnet, dass** die Flurwalze (19) in Fahrtrichtung hinter der Förderwalze (3) angeordnet ist.

10. Vorrichtung nach einem der Ansprüche 1 bis 9, **dadurch gekennzeichnet, dass** die Vorrichtung eine Schwimmstellung aufweist derart, dass unabhängige Bewegungen gegenüber der Zugmaschine umsetzbar sind, wobei mittels eines Querriegels (17) eine Höhenbewegung ausgleichbar ist.

11. Vorrichtung nach einem der Ansprüche 1 bis 10, **dadurch gekennzeichnet, dass** im Inneren des Behälters (1) wenigstens ein Schottblech (13) angeordnet ist.

12. Vorrichtung nach einem der Ansprüche 1 bis 11, **dadurch gekennzeichnet, dass** der Behälter (1) Räder (2) zur Abstützung am Boden aufweist, wobei die Räder (2) drehbar gelagert sind und eine Einzelradaufhängung aufweisen.

13. Vorrichtung nach einem der Ansprüche 1 bis 12, **dadurch gekennzeichnet, dass** die Vorrichtung Sicherheitsmaßnahmen in der Hydraulik wie Überdruck- und Rückschlagventile aufweist und dass die Vorrichtung mit dem Hydrauliksystem des Nutzfahrzeuges verbindbar ist.

14. Vorrichtung nach einem der Ansprüche 1 bis 13, **dadurch gekennzeichnet, dass** die Vorrichtung mittels einer eigenen Steuereinrichtung mittels Kabel oder kabellos bedienbar ist.

## Claims

1. Device for removing animal waste from farmyards and meadows for mounting on a commercial vehicle, comprising a support frame (7) for attaching the device to the commercial vehicle and a container (1) for collecting dirt with a container opening (1.2), wherein the container (1) is arranged on the support frame (7) so that it can be pivoted upward relative to the support frame (7) by means of a lifting element (9) in such a way that, in an emptying position, the dirt can be emptied through the container opening (1.2) of the upwardly pivoted container (1) and that, in a working position, the container (1) is pivoted downwards in such a way that the container opening (1.2) is closed by means of the support frame (7), and having a conveyor roller (3) arranged in an opening (1.1) with means for conveying the dirt into the container (1), wherein at least one means extends through the opening (1.1) in the direction of the floor, wherein the conveyor roller (3) is connected to the container (1), wherein the opening (1.1) is formed in the container or on the support frame and the conveyor roller (3) is designed in the form of a collection roller (3), wherein the collection roller (3) has circumferential collection lips (3.1) and wherein the collection roller (3) is arranged in the region of the opening (1.1), **characterized in that** the opening (1.1) in which the conveyor roller (3) is arranged is formed downwardly toward the floor in the working position of the device, and **in that** in the working position with a closed container (1), at least one collecting lip (3.1) extends through the downwardly facing opening (1.1) in the direction of the floor in such a way that the collecting lip (3.1) is spaced 3 mm to 20 mm from the floor and a negative pressure can be generated by means of the collection roller (3) through its rotation in the region of the downward-facing opening (1.1).

2. Device according to claim 1, **characterized in that** the collecting lips (3.1) extend over the entire width of the collection roller (3) and **in that** the downward-facing collecting lip (3.1) in contact with the dirt is spaced 3 to 20 mm from the floor in its vertical orientation, wherein the negative pressure can be generated by means of the collection roller (3) through its rotation in the region of the downward-facing opening (1.1), wherein the container (1) is arranged between 20 and 50 mm above the floor.

3. Device according to claim 1 or 2, **characterized in that** the conveyor roller (3) is arranged in front of the container opening (1.2) in the direction of travel, wherein in a first design, in a push mode of the device, the conveyor roller (3) is arranged on the support frame (7) and, in a second design, in a pull mode, the conveyor roller (3) is arranged on the upwardly pivotable container (1).

4. Device according to one of claims 1 to 3, **characterized in that** the conveyor roller (3) is height-adjustable and can be changed by means of a quick-release fastener (4).

5. Device according to one of claims 1 to 4, **characterized in that** the container (1) is connected to the support frame (7) by means of a hinge (8) and **in that** the pivoting movement is effected by means of a hydraulic lifting element (9), wherein a first end of the lifting element (9) is arranged on the container (1) and a second end of the lifting element is arranged on the support frame (7).

6. Device according to one of claims 1 to 5, **characterized in that** the support frame (7) has a connection receptacle (14) in the form of a Euro coupling.

7. Device according to one of claims 1 to 6, **characterized in that** the container (1) has a field roller (19) with a pivot bearing arranged at a distance from the container wall.

8. Device according to one of claims 1 to 6, **characterized in that** the support frame (7) has a field roller (19) with a pivot bearing.

9. Device according to claims 7 and 8, **characterized in that** the field roller (19) is arranged behind the conveyor roller (3) in the direction of travel.

10. Device according to one of claims 1 to 9, **characterized in that** the device has a floating position such that independent movements relative to the tractor can be implemented, wherein a height movement can be compensated by means of a crossbar (17).

11. Device according to one of claims 1 to 10, **characterized in that** at least one partition plate (13) is arranged inside the container (1).

12. Device according to one of claims 1 to 11, **characterized in that** the container (1) has wheels (2) for support on the ground, wherein the wheels (2) are rotatably mounted and have independent suspension.

13. Device according to one of claims 1 to 12, **characterized in that** the device has safety measures in the hydraulics, such as pressure relief and check valves, and **in that** the device can be connected to the hydraulic system of the commercial vehicle.

14. Device according to one of claims 1 to 13, **characterized in that** the device can be operated by means of its own control device via cable or wirelessly.

## Revendications

1. Dispositif destiné à nettoyer des cours de ferme et des pâturages pour son montage sur un véhicule utilitaire, comprenant un châssis porteur (7) pour la fixation du dispositif au véhicule utilitaire et un conteneur (1) destiné à la réception de matières polluantes avec une ouverture de conteneur (1.2), dans lequel le conteneur (1) est disposé sur le châssis porteur (7) de manière à pivoter vers le haut par rapport au châssis porteur (7) à l'aide d'un élément de levage (9) de telle sorte que, dans une position de vidage, les matières polluantes peuvent être vidées à travers l'ouverture de conteneur (1.2) du conteneur(1) pivoté vers le haut et en ce que, dans la position de travail, le conteneur (1) est à nouveau pivoté de telle sorte que l'ouverture de conteneur (1.2) soit fermée à l'aide du châssis porteur (7), ainsi qu'un rouleau transporteur (3) disposé dans une ouverture (1.1) muni de moyens pour transporter les matières polluantes dans le conteneur (1), dans lequel au moins un moyen passe à travers l'ouverture (1.1) en direction du sol, le rouleau transporteur (3) étant relié au conteneur (1),
dans lequel l'ouverture (1.1) est configurée dans le conteneur ou au niveau du châssis porteur et le rouleau transporteur (3) est configuré sous la forme d'un rouleau collecteur (3), dans lequel le rouleau collecteur (3) présente des lèvres de collecte circonférentielles (3.1) et dans lequel le rouleau collecteur (3) est disposé au niveau de l'ouverture (1.1),
**caractérisé en ce que** l'ouverture (1.1) dans laquelle le rouleau transporteur (3) est disposé est, dans la position de travail du dispositif, configurée vers le bas en direction du sol et **en ce que**, dans la position de travail lorsqu'un conteneur (1) est fermé, au moins une lèvre de collecte (3.1) passe en direction du sol à travers l'ouverture (1.1) dirigée vers le bas de telle sorte que la lèvre de collecte (3.1) soit distante de 3 mm à 20 mm du sol et qu'un vide puisse être généré à l'aide du rouleau collecteur (3) par sa rotation au niveau de l'ouverture (1.1) dirigée vers le bas.

2. Dispositif selon la revendication 1, **caractérisé en ce que** les lèvres de collecte (3.1) s'étendent sur toute la largeur du rouleau collecteur (3) et **en ce que** la lèvre de collecte (3.1) dirigée vers le bas et venant en contact avec les matières polluantes est distante du sol de 3 à 20 mm dans son orientation verticale, le vide pouvant être généré à l'aide du rouleau collecteur (3) par sa rotation au niveau de l'ouverture (1.1) dirigée vers le bas, le conteneur (1) étant disposé entre 20 et 50 mm au-dessus du sol.

3. Dispositif selon la revendication 1 ou 2, **caractérisé en ce que** le rouleau transporteur (3) est disposé devant l'ouverture de conteneur (1.2) dans la direction de déplacement, dans lequel dans un premier agencement dans un fonctionnement de poussée du dispositif le rouleau transporteur (3) est disposé sur le châssis porteur (7) et, dans un second agencement dans un fonctionnement de traction, le rouleau transporteur (3) est disposé au niveau du conteneur (1) qui peut pivoter vers le haut.

4. Dispositif selon l'une des revendications 1 à 3, **caractérisé en ce que** le rouleau transporteur (3) est réglable en hauteur et peut être remplacé à l'aide d'une fixation à dégagement rapide (4).

5. Dispositif selon l'une des revendications 1 à 4, **caractérisé en ce que** le conteneur (1) est relié au châssis porteur (7) à l'aide d'une charnière (8) et **en ce que** le mouvement de pivotement est effectué à l'aide d'un élément de levage hydraulique (9), dans lequel une première extrémité de l'élément de levage (9) est disposée au niveau du conteneur (1) et une seconde extrémité de l'élément de levage est disposée au niveau du châssis porteur (7).

6. Dispositif selon l'une des revendications 1 à 5, **caractérisé en ce que** le châssis porteur (7) présente une réception de raccordement (14) en forme de réception Euro.

7. Dispositif selon l'une des revendications 1 à 6, **caractérisé en ce que** le conteneur (1) présente un rouleau de sol (19) disposé à distance de la paroi du conteneur et muni d'un palier articulé.

8. Dispositif selon l'une des revendications 1 à 6, **caractérisé en ce que** le châssis porteur (7) présente un rouleau de sol (19) muni d'un palier articulé.

9. Dispositif selon la revendication 7 et 8, **caractérisé en ce que** le rouleau de sol (19) est disposé derrière le rouleau transporteur (3) dans la direction de déplacement.

10. Dispositif selon l'une des revendications 1 à 9, **caractérisé en ce que** le dispositif présente une position flottante de telle sorte que des mouvements indépendants par rapport à la machine de traction puissent être réalisés, dans lequel un mouvement en hauteur peut être compensé à l'aide d'une entretoise (17).

11. Dispositif selon l'une des revendications 1 à 10, **caractérisé en ce qu'**au moins une tôle de cloison étanche (13) est disposée à l'intérieur du conteneur (1).

12. Dispositif selon l'une des revendications 1 à 11, **caractérisé en ce que** le conteneur (1) présente des roues (2) pour s'appuyer au niveau du sol, les roues (2) étant montées de manière rotative et présentant une suspension de roue indépendante.

13. Dispositif selon l'une des revendications 1 à 12, **caractérisé en ce que** le dispositif présente des mesures de sécurité dans le système hydraulique telles que des soupapes de surpression et de retenue et **en ce que** le dispositif peut être relié au système hydraulique du véhicule utilitaire.

14. Dispositif selon l'une des revendications 1 à 13, **caractérisé en ce que** le dispositif peut être actionné à l'aide de son propre moyen de commande par câble ou sans fil.
